# EUROPEAN PATENT APPLICATION

(11) **EP 2 439 099 A2**
(43) Date of publication of application: **11.04.2012**
(21) Application number: 11008086.8
(22) Date of filing: 06.10.2011
(51) Int. Cl.: B60L 11/18

(54) **Vehicle charging system with charging efficiency control and providing adaptive charging service**

(30) Priority: 08.10.2010 CN 201010512855
(71) Applicant: Delta Electronics, Inc., Taoyuan Hsien 333 (TW)
(72) Inventor: Pan, Meng-Wen, Taoyuan Hsien 320 (TW); Chan, Chih-Chiang, Taoyuan Hsien 320 (TW)
(74) Representative: UEXKÜLL & STOLBERG

(57) **Abstract**

The invention discloses a charging system (100, 200) for electric vehicle (126) which includes at least one charging station (122). The charging station (122) includes a socket breaker (234). When the connection between the charging pump of the charging station (122) and the socket lock on the charging stand of the electric vehicle (126) is not secure or the charging current for charging the electric vehicle (126) is too large, the socket breaker (234) will open to shut down the power supply for the socket lock of the electric vehicle (126), thereby terminating the charging operation for the electric vehicle (126). Also, the charging station (122) includes an adaptive charging control circuit (224) and a power manager (225) for regulating the charging current for the electric vehicle (126) according to the charging demands of the electric vehicle (126) and the loading of a smart grid/utility grid (121), thereby providing flexible and adaptive charging service for the electric vehicle (126).

## Description

### FIELD OF THE INVENTION

The invention relates to a vehicle charging system, and more particularly to a vehicle charging system provided with charging efficiency control and providing adaptive charging service.

### BACKGROUND OF THE INVENTION

With the continuous reduction in the reserve of petroleum and natural gas, the electric vehicle that is driven by electric motor is becoming more and more popular. Electric vehicle (EV) is a transportation vehicle propelled by electricity. When the capacity of the rechargeable battery of the electric vehicle is low, the rechargeable battery of the electric vehicle is required to be charged. The electric vehicle generally uses a power outlet or a proprietary charging station for charging, which will last for several hours. Many charging service providers for electric vehicle install electric vehicle networks in the United States, Europe, Australia, Japan, and Singapore to provide the electric vehicle of contracted members to be charged or be replaced with a new rechargeable battery. As to the billing method and the configuration of the charging station, numerous technological solutions have been proposed to meet the consumer's needs. An example of such technological solution is given in U.S. Patent Publication No. 2009/0177580 which claims the method for collecting electric vehicle power consumption tax, and in U.S. Patent Publication No. 2009/0174365 which claims a network-controlled charging system for electric vehicle. Thus far, however, the contemporary charging system for electric vehicle only provides a power converter module, an electric meter, a simple user interface to allow the consumer to control the start and the end of the charging operation to the electric vehicle, or allow the consumer to proceed with user identification or price calculation by the provision of a network module and a communication interface. Hence, the contemporary charging station can not provide overall charging efficiency control for a single charging station or a group of charging stations. Either, the contemporary charging station can not provide adaptive charging service for charging station.

In view of the drawbacks encountered by the prior art, the applicant contributes a vehicle charging system having charging efficiency control and providing adaptive charging service.

### SUMMARY OF THE INVENTION

An object of the invention is to provide a vehicle charging system having charging efficiency control and providing adaptive charging service.

The major aspect of the invention is attained by a vehicle charging system, which includes a power grid; at least one charging station connected to the power grid through an electric transmission interface for receiving a first power from the power grid and converting the first power into a second power for charging an electric vehicle; and a management center remotely connected to the at least one charging station through a network for recording and managing members affiliated to the vehicle charging system and the charging preferences and charging characteristics in connection with the charging service provided for the electric vehicles of the members, and recording the fee particulars of the at least one charging station. The at least one charging station includes a socket breaker for controlling whether the at least one charging station is allowed to charge the electric vehicle. If the at least one charging station is determined to be disallowed to charge the electric vehicle, the socket breaker will open to shut down the power supply for the socket lock mounted on the charging stand of the electric vehicle, thereby unlocking the socket lock. Therefore, the at least one charging station stops charging the electric vehicle. In addition, the at least one charging station includes a power module for receiving the first power and converting the first power into the second power for charging the electric vehicle, and an adaptive charging control circuit for issuing charging commands according to the commands indicative of the demands for the electric energy of the electric vehicle, thereby controlling the charging operation of the electric vehicle. The at least one charging station further includes a power manager for managing the power module according to the charging commands indicative of the charging demands and issued by the adaptive charging control circuit or according to the loading of the power grid, thereby regulating and limiting the charging current provided for the electric vehicle.

Now the foregoing and other features and advantages of the present invention will be best understood through the following descriptions with reference to the accompanying drawings, wherein:

### BRIEF DESCRIPTION OF THE DRAWINGS

FIG. 1 is a block diagram showing the inventive vehicle charging system; and

FIG. 2 is a detailed block diagram illustrating the inventive vehicle charging system.

### DESCRIPTION OF THE PREFERRED EMBODIMENT

An exemplary embodiment embodying the features and advantages of the invention will be expounded in following paragraphs of descriptions. It is to be realized that the present invention is allowed to have various modification in different respects, all of which are without departing from the scope of the present invention, and the description herein and the drawings are to be taken as illustrative in nature, but not to be taken as a confinement for the invention.

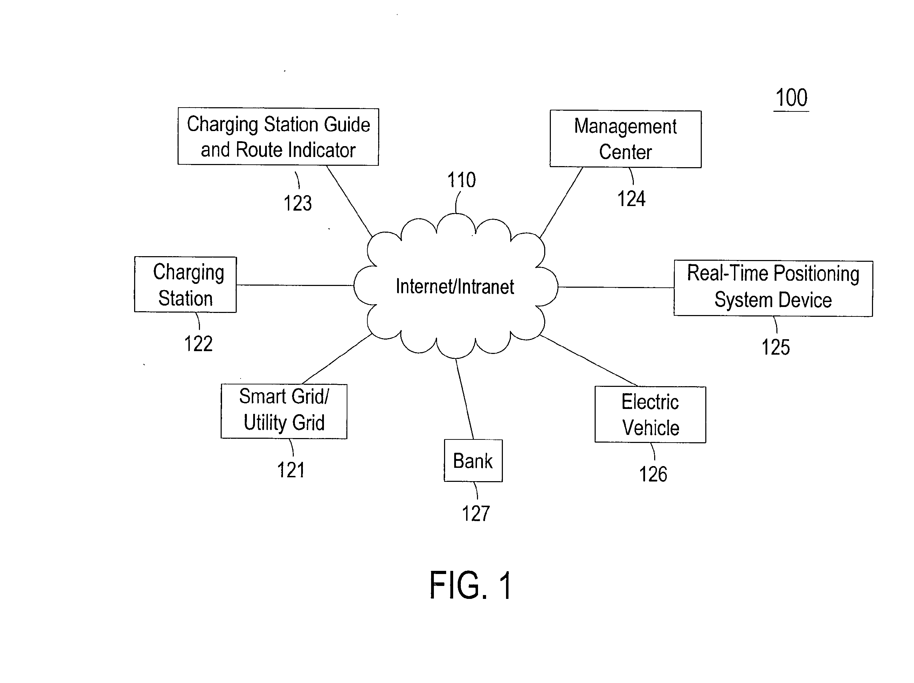

FIG. 1 is a block diagram showing a vehicle charging system 100 according to an exemplary embodiment of the invention. It should be noted that similar elements are labeled with the same reference numerals throughout the entire specification. In FIG 1, the vehicle charging system 100 includes a smart grid/utility grid 121, at least one charging station 122, a real-time positioning system device 125, a charging station guide and route indicator 123, and a management center 124. The vehicle charging system 100 is configured to charge the electric vehicle 126. Each unit of the vehicle charging system 100 is communicating with other units of the vehicle charging system 100 through the Internet/Intranet 110. The financial transaction involved with the charging service is accomplished through the bank 127. As to the configuration and operation of each unit of the vehicle charging system 100, it will be elaborated in the following.

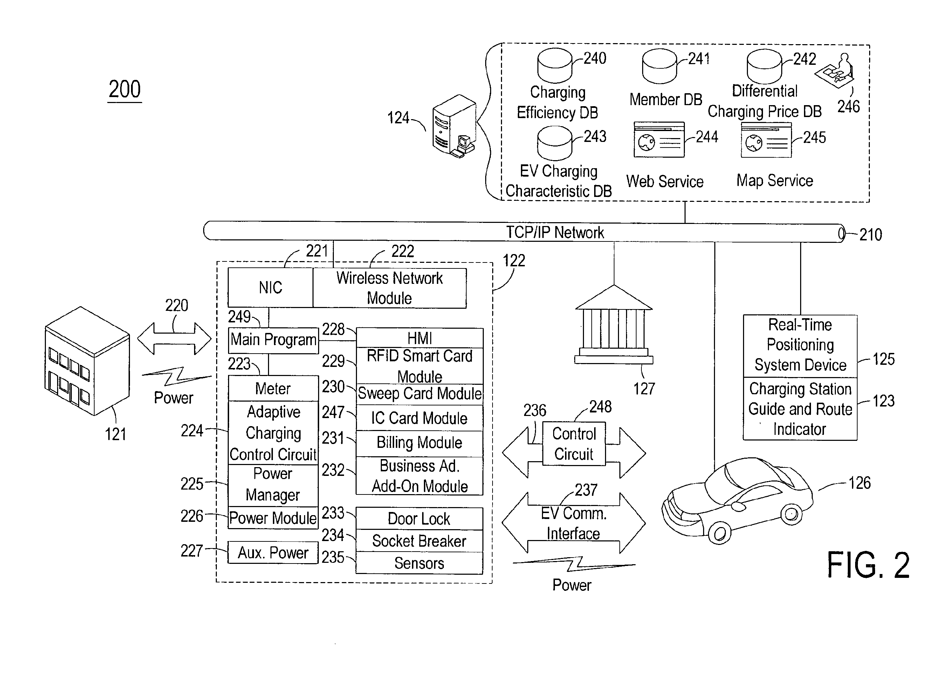

FIG. 2 shows the detailed block diagram of the vehicle charging system 100 of FIG 1, in which the TCP/IP network 210 serves as the communication backbone for the vehicle charging system 100. In FIG 2, each unit of the vehicle charging system 200 is communicating with other units of the vehicle charging system 200 through the TCP/IP network 210, in which an exemplary example of the TCP/IP network 210 is the Internet/Intranet 110 shown in FIG 1. The vehicle charging system 200 includes a smart grid/utility grid 121 and at least one charging station 122, in which the smart grid/utility grid 121 is configured to transmit power and data to the charging station 122 by means of power wires of a power transmission interface 220, such as a power over Ethernet (PoE) interface or a Zigbee interface. The charging station 122 includes a network interface card (NIC) 221 and a wireless network module 222 for receiving packets from the TCP/IP network 210 and transmit packets to desired devices through the TCP/IP network 210. The wireless network module 222 may be a WiFi module, a Zigbee module, a GPRS module, or a CDMA module. In addition, the network interface card 221 and the wireless network module 222 can acquire the status information of the smart grid/utility grid 121 through the power transmission interface 220. If the utility grid is taken as the power grid for the power source of charging, the wireless network module 222 can monitor the remaining capacity of the utility grid by the network interface card 221 through the power transmission interface 220, and report the information in connection with the remaining capacity of the utility grid to the management center 124. If the smart grid is taken as the power grid for the power source of charging, the wireless network module 222 can acquire the information in connection with the remaining capacity of the smart grid by the network interface card 221 through the power transmission interface 220, and report the information in connection with the remaining capacity of the smart grid to the management center 124. Besides, the wireless network module 222 can acquire the allowable total charging quantity specified in the contract dealt with the charging station service provider from the management center 124.

In FIG 2, the charging station 122 includes a main program 249 configured to coordinate the operation of the internal units of the charging station 122 and process the data received from the TCP/IP network 210. The charging station 122 also includes a meter 223 for showing the available charging capacity for charging the electric vehicle 126 by the charging station 122. The charging station 122 also includes an adaptive charging control circuit 224 for issuing charging commands to control the charging operation according to the commands indicative of the demands for the electric energy of the electric vehicle, in which the commands indicative of the demands for the electric energy of the electric vehicle is issued by the battery management system (BMS, not shown) of the electric vehicle 126. The charging station 122 also includes a power module 226 for converting the electric power provided by the smart grid/utility grid 121, e.g. AC power, into the power, e.g. DC power, which is required by the rechargeable battery of the electric vehicle 126. The charging station 122 also includes a power manager 225 for managing the power conversion operation of the power module 226 according to the charging commands indicative of the charging demands of the electric vehicle 126 issued by the adaptive charging control circuit 224 and the loading of the smart grid/utility grid 121, thereby regulating and limiting the charging current for the electric vehicle 126. The charging station 122 also includes an auxiliary power 227 for providing the operating power for the internal units of the charging station 122. Hence, the charging station 122 can employ the adaptive charging control circuit 224, the power manager 225, and the power module 226 to regulate the charging current for the electric vehicle 126 according to the charging demands of the electric vehicle 126 or the loading of the smart grid/utility grid 121. Therefore, the charging station 122 can provide flexible and adaptive charging service for the electric vehicle 126.

The charging station 122 also includes a human-machine interface (HMI) 228, which is an user interface for the user to operate the charging station 122 and includes buttons and LCD monitors (not shown). The charging station 122 also includes a RFID smart card module 229, a sweep card module 230, and an IC card module 247 for performing financial transaction for the charging service provided for the electric vehicle 126 and user authentication. The charging station 122 also includes a billing module 231 for calculating the fee for the charging service. The charging station 122 also includes a business ad add-on module 232 for displaying commercial advertisements on the charging station for promotion. The charging station 122 also includes a series of sensors 235 for detecting if the user opens the maintenance door of the charging station 122. If the user opens the maintenance door of the charging station 122, the sensor 235 sends a signal to the main program 249 to shut down the operation of the charging station 122. The sensors 235 may also be used to detect if the charging connector of the charging station 122 is sabotaged, or detect the luminance of the LCD monitor in the human-machine interface 228 to change the luminance of the LCD monitor accordingly. Or otherwise, the sensors 235 may also be used to detect the humidity of the charging station 122 in order to shut down the operation of the charging station 122 when the humidity of the charging station 122 exceeds a predetermined level. The charging station 122 also includes a door lock 233 for controlling whether the user is allowed to access the charging pump (not shown) of the charging station 122. When the user passes the user authentication process and the main program 249 allows the user to charge the electric vehicle 126, the door lock 233 is unlocked to allow the user to take the charging pump out of the charging station 122 to charge the electric vehicle 126. The charging station 122 also includes a socket breaker for controlling whether the charging pump of the charging station 122 is allowed to charge the electric vehicle 126. When the user connects the charging pump of the charging station 122 to the charging stand (not shown) of the electric vehicle 126, the user has to lock the socket lock (not shown) on the charging stand of the electric vehicle 126 for charging. The socket lock is an electronic lock and its operating power is supplied by the charging station 122. If the main program 249 determines that the connection between the charging pump and the socket lock on the charging stand of the electric vehicle 126 is insecure or the charging current for the electric vehicle 126 is too large, and thereby declining to continue the charging operation for the electric vehicle 126, the socket breaker 234 will open to shut down the power supply for the socket lock on the charging stand of the electric vehicle 126. Under this condition, the socket lock on the charging stand of the electric vehicle 126 will be unlocked and the charging pump of the charging station 122 stops charging the electric vehicle 126 accordingly. In addition, the charging station 122 can communicate with the electric vehicle 126 through an electric vehicle communication interface 237. The electric vehicle communication interface 237 may be a power over Ethernet (PoE) interface or a Zigbee interface, and is used to allow the charging station 122 to understand the charging demands of the electric vehicle 126.

The charging station 122 includes a control circuit 248 which is placed on the connection channel 236 connected across the electric vehicle 126 and the charging station 122. The control circuit 248 is made up of a pulse-width-modulation controller (not shown), a photo coupler (not shown), and mechanical switches (not shown). The control circuit 248 is configured to control the charging operation of the charging station 122 for the electric vehicle 126. The charging station 122 is configured to communicate with the battery management system of the electric vehicle 126 through the electric vehicle communication interface 237.

In addition, the vehicle charging system 200 according to the invention further includes a real-time positioning system device 125 which is preferably made up of a global positioning system (GPS) device for displaying the real-time position of the electric vehicle 126 and the road map. The vehicle charging system 200 according to the invention further includes a charging station guide and route indicator 123 for indicating the position of the nearest charging station 122 and the shortest driving route to the nearest charging station 122, and the remaining capacity of the neighboring charging stations 122. The real-time positioning system device 125 and the charging station guide and route indicator 123 may be mounted aboard with the electric vehicle 126.

Also, the inventive vehicle charging system 200 further includes a management center 124 for storing a plurality of databases. These databases include a charging efficiency database 240 for recording the rush hour for charging the electric vehicle 126 and the information in connection with charging efficiency. These databases include a member database 241 for recording the charging preferences of the contracted member. The management center 124 further includes a differential charging price database 242 for recording the fee particulars for charging the electric vehicle 126 at different time, different locations, and different charging stations 122. The management center 124 further includes an electric vehicle charging characteristic database 243 for recording the charging characteristics of the electric vehicles 126 that have ever been charged at the affiliated charging station 122. Furthermore, the management center 124 further provides a web service 244 for providing the up-to-date news and service announcements in connection with the affiliated charging stations 122 online, and a map service 245 for providing the geographical information of the affiliated charging stations 122. The management center 124 further provides an accountant program 246 for providing a best solution for allowing the contracted member to complete the charging of the electric vehicle 126 with the lowest price and the shortest charging time, and notifying the contracted member of this solution through the TCP/IP network 210.

In conclusion, the invention provides a vehicle charging system with charging efficiency control and providing adaptive charging service, in which the control of the charging efficiency is achieved by installing a socket breaker in the charging station. When the connection between the charging pump of the charging station and the socket lock mounted on the charging stand of the electric vehicle is insecure, or the charging current for charging the electric vehicle is too large, the socket breaker will open to cut off the power supply to the socket lock on the charging stand of the electric vehicle. Also, the adaptive charging service is rendered by installing an adaptive charging control circuit and a power manager in the charging station. Hence, the inventive charging station can regulate the charging current for charging the electric vehicle according to the charging demands of the electric vehicle or the loading of the smart grid/utility grid. Therefore, the inventive charging station can provide flexible and adaptive charging service for electric vehicle.

## Claims

1. A vehicle charging system (100, 200), comprising:
a power grid (121); and
at least one charging station (122) connected to and communicated with the power grid (121) through a power transmission interface (220), and communicated with an electric vehicle (126) through an electric vehicle communication interface (237) for charging the electric vehicle (126);
wherein the at least one charging station (122) comprises:
a power module (226) for receiving a first electric power from the power grid (121) and converting the first electric power into a second electric power;
an adaptive charging control circuit (224) for issuing a charging command for controlling the charging operation of the electric vehicle (126) according to commands indicative of demands for electric energy of the electric vehicle (126); and
a power manager (225) for managing the power module (226) according to the charging command issued by the adaptive charging control circuit (224) and a loading of the power grid (121), thereby regulating and limiting a charging current provided for the electric vehicle (126).

2. The vehicle charging system according to claim 1 wherein the at least one charging station (122) further includes:
a meter (223) for displaying an allowable charging capacity of the at least one charging station (122); and
an auxiliary power (227) for providing operating power for internal circuits of the at least one charging station (122).

3. The vehicle charging system according to claim 1 wherein the at least one charging station (122) further includes:
a socket breaker (234) for controlling whether the at least one charging station (122) is allowed to charge the electric vehicle (126), and wherein when the at least one charging station (122) is determined to be disallowed to charge the electric vehicle (126), the socket breaker (234) is open to shut down power supply for a socket lock mounted on a charging stand of the electric vehicle (126), thereby terminating the charging operation for the electric vehicle (126); and
a door lock (233) for controlling whether a user of the electric vehicle (126) is allowed to access the at least one charging station (122) to charge the electric vehicle (126).

4. The vehicle charging system according to claim 1 wherein the power transmission interface (220) includes a power over Ethernet interface or a Zigbee interface, and the electric vehicle communication interface (237) is a power over Ethernet interface or a Zigbee interface.

5. The vehicle charging system according to claim 1 further comprising a control circuit (248) mounted between the electric vehicle (126) and the at least one charging station (122) for controlling the charging operation of the electric vehicle (126).

6. The vehicle charging system according to claim 1 further comprising a management center (124) remotely connected to the at least one charging station (122) through a network (110, 210) for recording and managing information in connection with members affiliated with the at least one charging station (122) and the electric vehicles (126) associated therewith, recording and managing charging preferences in connection with the charging service provided for electric vehicles (126) of the members, and recording fee particulars of the at least one charging station (122), wherein the network (110, 210) is a TCP/IP network.

7. A vehicle charging system (100, 200), comprising:
a power grid (121); and
at least one charging station (122) connected to the power grid (121) through a power transmission interface (220) for receiving a first electric power and converting the first electric power into a second electric power for charging an electric vehicle (126);
wherein the at least one charging station (122) includes a socket breaker (234) for controlling whether the at least one charging station (122) is allowed to charge the electric vehicle (126), and wherein when the at least one charging station (122) is determined to be disallowed to charge the electric vehicle (126), the socket breaker (234) is open to shut down power supply for a socket lock mounted on a charging stand of the electric vehicle (126), thereby terminating the charging operation for the electric vehicle (126).

8. The vehicle charging system according to claim 7 wherein the at least one charging station (122) is configured to communicate with the electric vehicle (126) through an electric vehicle communication interface (237), and wherein the electric vehicle communication interface (237) includes a power over Ethernet interface or a Zigbee interface, and the power transmission interface (220) includes a power over Ethernet interface or a Zigbee interface.

9. The vehicle charging system according to claim 7 wherein the at least one charging station (122) further includes:
a meter (223) for displaying an allowable charging capacity of the at least one charging station (122);
a power module (226) for receiving the first electric power from the power grid (121) and converting the first electric power into the second electric power for charging the electric vehicle (126);
an adaptive charging control circuit (224) for issuing a charging command for controlling the charging operation of the electric vehicle (126) according to commands indicative of demands for electric energy of the electric vehicle (126); and
a power manager (225) for managing the power module (226) according to the charging command issued by the adaptive charging control circuit (224) and a loading of the power grid (121), thereby regulating and limiting a charging current provided for the electric vehicle (126).

10. The vehicle charging system according to claim 7 further comprising a control circuit (248) mounted between the electric vehicle (126) and the at least one charging station (122) for controlling the charging operation of the electric vehicle (126).

11. The vehicle charging system according to claim 7 wherein the at least one charging station (122) further includes a RFID smart card module (229), a sweep card module (230), and an IC card module (247) for performing a financial transaction for the charging service provided for the electric vehicle (126) and user authentication.

12. The vehicle charging system according to claim 7 wherein the at least one charging station (122) further includes:
a door lock (233) for controlling whether a user of the electric vehicle (126) is allowed to access the at least one charging station (122) to charge the electric vehicle (126); and
a sensor (235) for detecting if a maintenance door of the at least one charging station (122) is open, and if it is detected that the maintenance door of the at least one charging station (122) is open, the sensor (235) sends a control signal to shut down the operation of the at least one charging operation (122).

13. The vehicle charging system according to claim 7 wherein the at least one charging station (122) further includes:
a billing module (231) for calculating the fee for the charging service provided for charging the electric vehicle (126); and
a business advertisement add-on module (232) for displaying commercials on the at least one charging station (122).

14. The vehicle charging system according to claim 7 further comprising a management center (124) remotely connected to the at least one charging station (122) through a network (110, 210) for recording and managing information in connection with members affiliated with the at least one charging station (122) and electric vehicles (126) associated therewith, recording and managing charging preferences in connection with the charging service provided for electric vehicles (126) of the members, and recording fee particulars of the at least one charging station (126), wherein the network (110, 210) is a TCP/IP network.

15. The vehicle charging system according to claim 7 wherein the at least one charging station (122) further includes:
a human-machine interface (228) for providing a user interface for a user of the electric vehicle (126) to operate the at least one charging station (122); and
an auxiliary power (227) for providing operating power for internal circuits of the at least one charging station (122).
